(19) **Europäisches Patentamt European Patent Office Office européen des brevets**

(11) **EP 3 310 123 B1**

(12) **EUROPEAN PATENT SPECIFICATION**

(45) Date of publication and mention of the grant of the patent:
**06.11.2019 Bulletin 2019/45**

(21) Application number: **15911016.2**

(22) Date of filing: **21.12.2015**

(51) Int Cl.:
*H04W 92/00* (2009.01)        *H04W 88/08* (2009.01)

(86) International application number:
**PCT/CN2015/098110**

(87) International publication number:
**WO 2017/107016 (29.06.2017 Gazette 2017/26)**

(54) **DATA TRANSMISSION METHOD, REMOTE RADIO UNIT (RRU) AND BASEBAND UNIT (BBU)**

DATENÜBERTRAGUNGSVERFAHREN, ENTFERNTE FUNKEINHEIT (RRU) UND BASISBANDEINHEIT (BBU)

PROCÉDÉ DE TRANSMISSION DE DONNÉES, UNITÉ RADIO DISTANTE (RRU) ET UNITÉ DE BANDE DE BASE (BBU)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.04.2018 Bulletin 2018/16**

(73) Proprietor: **Huawei Technologies Co., Ltd. Longgang District Shenzhen, Guangdong 518129 (CN)**

(72) Inventors:
• **WANG, Jueping Shenzhen Guangdong 518129 (CN)**
• **YE, Wei Shenzhen Guangdong 518129 (CN)**

• **ZHANG, Si Shenzhen Guangdong 518129 (CN)**

(74) Representative: **Pfenning, Meinig & Partner mbB Patent- und Rechtsanwälte Joachimsthaler Straße 10-12 10719 Berlin (DE)**

(56) References cited:

| | |
|---|---|
| WO-A1-2013/048526 | WO-A1-2013/123670 |
| WO-A1-2013/166819 | WO-A1-2015/172277 |
| WO-A1-2015/172290 | CN-A- 102 118 191 |
| CN-A- 102 404 033 | CN-A- 103 312 480 |
| US-A1- 2011 287 791 | US-A1- 2013 294 419 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

Embodiments of the present invention relate to the communications field, and more specifically, to a data transmission method, a remote radio unit RRU, and a baseband unit BBU.

**BACKGROUND**

In an existing wireless cellular communications system, a distributed base station is one of main deployment forms currently. In the distributed base station, a remote radio unit (Remote Radio Unit, "RRU" for short) and a baseband unit (Baseband Unit, "BBU" for shot) are generally interconnected by using a cable, to implement a common public radio interface (Common Public Radio Interface, "CPRI" for short) signal connection.

Currently, the BBU is responsible for functions of basebands including a layer 1 (Layer 1, "L1" for short), a layer 2 (Layer 2, "L2" for short), and a layer 3 (Layer 3, "L3" for short). The RRU is mainly responsible for radio frequency transceiver functions including radio frequency transmitting/receiving (TRX) and power amplification (Power Amplifier, "PA" for short).

In a downlink direction, after completing functions of fast Fourier transformation (Fast Fourier Transformation, "FFT" for short) and inserting a cyclic prefix (Cyclic Prefix, "CP" for short), the baseband L1 of the BBU transmits, by using a CPRI interface, IQ data of L1 to the RRU for processing. In an uplink direction, after receiving data from the RRU, the baseband L1 of the BBU first removes a CP, then performs fast Fourier transformation (Fast Fourier Transformation, "FFT" for short), and then completes other data processing.

US 2013/0294419 A1 discusses a method in a radio equipment unit for downlink radio communication with a UE of a radio network. The radio equipment unit provides radio communication with UE in at least one cell, and is connected to a radio equipment control unit controlling the radio communication. The method comprises receiving from the radio equipment control unit baseband processed user related data and information indicating a frequency radio resource allocated for a transmission to the UE. The method also comprises generating cell defining signals for the cell of the UE, and transmitting the generated cell defining signals added to the baseband processed user related data to the UE, using the indicated frequency radio resource.

WO 2015/172277 A1 discusses a method and device for transmitting data between a base band unit (BBU) and a remote radio unit (RRU). The method comprises: selecting, by an RRU, partial data of received data, and sending the partial data to a BBU through a common public radio interface (CPRI).

WO 2013/123670 A1 discusses an enhanced Node B (e NB) configured for use in a cooperative radio access networks (C-RAN) and a method for central baseband unit (BBU) processing. The eNB may include a baseband unit (BBU) processing pool comprising a plurality of processing units. The BBU processing pool is configured to share the processing load of several sectors. A control unit may monitor the processing load of the processing units and perform dynamic load sharing by migrating the baseband processing between the processing units without changing a carrier used by user equipment operating with a sector.

WO 2015/172290 A1 discusses a front-end unit that operates within a C-RAN architecture to perform the functions of cellular signal processing and resource selection between an RRU and the BBU pool network. The front-end unit supports flexible load migration and CoMP (coordinated multipoint) in the CRAN BBU while also reducing data transmission within the BBU pool network or between the BBU pool network and the RRU.

US 2011/0287791 A1 discusses a wireless communication system comprising base stations that communicate with a terminal. Each of the base station has antennas. Each of the base stations transmits a first reference signal unique to each of the antennas which does not overlap with another antenna among the base stations at least in a vicinity thereof. The terminal receives the first reference signal and estimates a received power of the first reference signal for each of the antennas, selects antennas suitable for communication from among the antennas based on a result of estimating the received power, and transmits a result of selecting the antennas to the each of the base stations. The each of the base stations refers the result of selecting the antennas transmitted from the terminal, assigns the selected antennas belonging to different cells to the terminal, and notifies the terminal of a result of assigning the antennas.

WO 20130/048526 A1 discusses a remote radio unit (RRU) in a radio base station system can include a cyclic prefix (CP) module having a CP adder for downlink channel processing and a CP remover for uplink channel processing. The RRU can be configured to communicate with a base band unit (BBU) via a physical communication link and communicate with a wireless mobile device via an air interface. The BBU can be configured for media access control (MAC) layer processing.

As a large-scale antenna array is widely applied, fronthaul data traffic between the BBU and the RRU is increasingly large, and accordingly, deployment difficulty and costs increase. Further, in a scenario in which the RRU and the BBU are remotely connected, the deployment difficulty and costs are greater. Therefore, data traffic between the BBU and the RRU needs to be reduced.

## SUMMARY

Embodiments of the present invention provide a data transmission method, a remote radio unit RRU, and a baseband unit BBU. This can reduce data traffic between the BBU and the RRU, so as to reduce fronthaul data bandwidth between the BBU and the RRU. The present invention is defined by the features of the independent claims. Further embodiments are defined in the dependent claims.

A first aspect provides a data transmission method, where the method is applied to a base station, the base station includes a baseband unit BBU and a remote radio unit RRU, and the method includes: receiving, by the RRU, stream data sent by the BBU, where the stream data is obtained after the BBU performs resource mapping processing on to-be-transmitted downlink data; performing, by the RRU, stream to antenna mapping processing on the stream data; and sending, by the RRU, mapping-processed data to user equipment by using an antenna.

With reference to the first aspect, in an implementation manner of the first aspect, the sending, by the RRU, mapping-processed data to user equipment by using an antenna includes: performing, by the RRU, inverse fast Fourier transformation IFFT processing and cyclic prefix CP insertion processing on the mapping-processed data, to obtain downlink data; and sending, by the RRU, the downlink data to the user equipment by using the antenna.

With reference to the first aspect and the foregoing implementation manner of the first aspect, in another implementation manner of the first aspect, the method further includes: receiving, by the RRU, a downlink dynamic antenna weighted value sent by the BBU; and the performing, by the RRU, stream to antenna mapping processing on the stream data includes: performing, by the RRU, the stream to antenna mapping processing on the stream data according to the downlink dynamic antenna weighted value.

With reference to the first aspect and the foregoing implementation manners of the first aspect, in another implementation manner of the first aspect, the method further includes: performing, by the RRU, antenna to beam mapping processing on data of the user equipment; and sending, by the RRU, mapping-processed data to the BBU.

With reference to the first aspect and the foregoing implementation manners of the first aspect, in another implementation manner of the first aspect, the method further includes: receiving, by the RRU by using the antenna, an uplink signal sent by the user equipment, where the uplink signal includes the data and a sounding reference signal SRS; separating, by the RRU, the SRS and the data from the uplink signal; and sending, by the RRU, the SRS to the BBU.

With reference to the first aspect and the foregoing implementation manners of the first aspect, in another implementation manner of the first aspect, the separating, by the RRU, the SRS and the data from the uplink signal includes: performing, by the RRU, fast Fourier transformation FFT processing and cyclic prefix CP removing processing on the uplink signal, to obtain a frequency domain signal; and the separating, by the RRU, the SRS and the data from the uplink signal includes: separating, by the RRU, the SRS and the data from the frequency domain signal.

With reference to the first aspect and the foregoing implementation manners of the first aspect, in another implementation manner of the first aspect, the data includes non-spatial multiplexing data and spatial multiplexing data; and the performing, by the RRU, antenna to beam mapping processing on data of the user equipment includes: receiving an uplink dynamic antenna weighted value sent by the BBU; performing antenna to beam mapping processing on the spatial multiplexing data according to the uplink dynamic antenna weighted value; and performing antenna to beam mapping processing on the non-spatial multiplexing data according to an uplink static antenna weighted value.

A second aspect provides a data transmission method, where the method is applied to a base station, the base station includes a baseband unit BBU and a remote radio unit RRU, and the method includes: performing, by the BBU, resource mapping processing on to-be-transmitted downlink data to obtain stream data; and sending, by the BBU, the stream data to the RRU, so that the RRU performs stream to antenna mapping processing on the stream data, and sends mapping-processed data to user equipment by using an antenna.

With reference to the second aspect, in an implementation manner of the second aspect, the method further includes: determining, by the BBU, a downlink dynamic antenna weighted value; and sending, by the BBU, the downlink dynamic antenna weighted value to the RRU, so that the RRU performs the stream to antenna mapping processing on the stream data according to the downlink dynamic antenna weighted value.

With reference to the second aspect and the foregoing implementation manner of the second aspect, in another implementation manner of the second aspect, the method includes: receiving, by the BBU, data sent by the RRU, where the data is obtained after the RRU performs antenna to beam mapping processing on data of the user equipment; and processing, by the BBU, the data to obtain uplink data.

With reference to the second aspect and the foregoing implementation manners of the second aspect, in another implementation manner of the second aspect, the method further includes: receiving, by the BBU, a sounding reference signal SRS sent by the RRU.

With reference to the second aspect and the foregoing implementation manners of the second aspect, in another implementation manner of the second aspect, the processing, by the BBU, the data to obtain uplink data includes:

obtaining, by the BBU, frequency domain data after performing Fourier transformation FFT processing and cyclic prefix CP removing processing on the data; and processing, by the BBU, the frequency domain data to obtain the uplink data.

With reference to the second aspect and the foregoing implementation manners of the second aspect, in another implementation manner of the second aspect, the data includes non-spatial multiplexing data and spatial multiplexing data, and the method further includes: determining, by the BBU, an uplink dynamic antenna weighted value; and sending, by the BBU, the uplink dynamic antenna weighted value to the RRU, so that the RRU performs antenna to beam mapping processing on the spatial multiplexing data according to the uplink dynamic antenna weighted value.

A third aspect provides a baseband unit BBU, configured to execute the method in the foregoing first aspect or any possible implementation manner of the first aspect. Specifically, the BBU includes a module configured to execute the method in the foregoing first aspect or any possible implementation manner of the first aspect.

A fourth aspect provides a remote radio unit RRU, configured to execute the method in the foregoing second aspect or any possible implementation manner of the second aspect. Specifically, the RRU includes a module configured to execute the method in the foregoing second aspect or any possible implementation manner of the second aspect.

A fifth aspect provides a computer readable medium, configured to store a computer program, and the computer program includes an instruction used for executing the method in the first aspect or any possible implementation manner of the first aspect.

A sixth aspect provides a computer readable medium, configured to store a computer program, and the computer program includes an instruction used for executing the method in the second aspect or any possible implementation manner of the second aspect.

A seventh aspect provides a computer program product, and the computer program product includes computer program code. The computer program code is run by an RRU, so that the RRU executes the method in the foregoing first aspect or any possible implementation manner of the first aspect.

An eighth aspect provides a computer program product, and the computer program product includes computer program code. The computer program code is run by a BBU, so that the BBU executes the method in the foregoing second aspect or any possible implementation manner of the second aspect.

## BRIEF DESCRIPTION OF DRAWINGS

FIG. 1 is an architecture diagram of a distributed base station in the prior art;
FIG. 2 is a schematic diagram of function distribution of a BBU and an RRU in the prior art;
FIG. 3 is a schematic flowchart of a data transmission method according to an embodiment of the present invention;
FIG. 4 is a schematic diagram of a data transmission method according to a specific embodiment of the present invention;
FIG. 5A and FIG. 5B are a schematic diagram of a data transmission method according to another specific embodiment of the present invention;
FIG. 6A, FIG. 6B, and FIG. 6C are a schematic diagram of a data transmission method according to still another specific embodiment of the present invention;
FIG. 7 is a schematic block diagram of an RRU according to an embodiment of the present invention;
FIG. 8 is a schematic block diagram of a BBU according to an embodiment of the present invention;
FIG. 9 is another schematic block diagram of a BBU according to an embodiment of the present invention;
FIG. 10 is a schematic block diagram of an RRU according to another embodiment of the present invention; and
FIG. 11 is a schematic block diagram of a BBU according to another embodiment of the present invention.

## DESCRIPTION OF EMBODIMENTS

Technical solutions of embodiments of the present invention may be applied to various communications systems, such as a Global System for Mobile Communications (Global System of Mobile Communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a Long Term Evolution (Long Term Evolution, "LTE" for short) system, an LTE frequency division duplex (Frequency Division Duplex, "FDD" for short) system, an LTE time division duplex (Time Division Duplex, "TDD" for short) system, a Universal Mobile Telecommunications System (Universal Mobile Telecommunication System, "UMTS" for short), and a future 5G communications system.

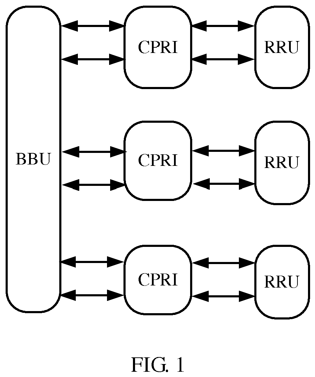

FIG. 1 is an architecture diagram of a distributed base station in the prior art. As shown in FIG. 1, the distributed base station includes a baseband unit (Baseband Unit, "BBU" for short) and a remote radio unit (Remote Radio Unit, "RRU" for short), and baseband data is transmitted between the BBU and the RRU by using a common public radio interface (Common Public Radio Interface, "CPRI" for short). Generally, BBUs are centrally deployed in an equipment room, RRUs are deployed at a remote end, and one BBU may be connected to multiple RRUs.

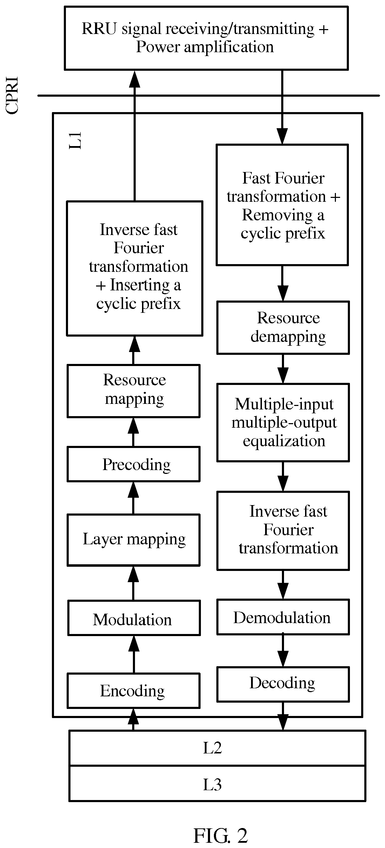

FIG. 2 shows specific functions of a BBU and an RRU in the prior art. As shown in FIG. 2, the BBU is responsible for functions of basebands including a layer 1 (Layer 1, "L1" for short), a layer 2 (Layer 2, "L2" for short), and a layer 3 (Layer 3, "L3" for short). Downlink functions of the baseband L1 mainly include: encoding (Encoder), modulation (Modulation), layer mapping (Layer Mapping), precoding (Precording), resource mapping (Resource Element Mapping), inverse fast Fourier transformation (Inverse Fast Fourier Transformation, "IFFT" for short), and inserting a cyclic prefix (Cyclic Prefix, "CP" for short). Uplink functions of the baseband L1 include fast Fourier transformation (Fast Fourier Transformation, "FFT" for short), removing a CP, resource demapping (Resource Element Demapping), multiple-input multiple-output (Multiple-Input Multiple-Output, "MIMO" for short), equalization (Equalizer), IFFT, demodulation (Demodulation), and decoding (Decoder). With wide application of a large-scale antenna array, fronthaul data traffic between the BBU and the RRU is increasingly large, and accordingly, deployment difficulty and costs increase.

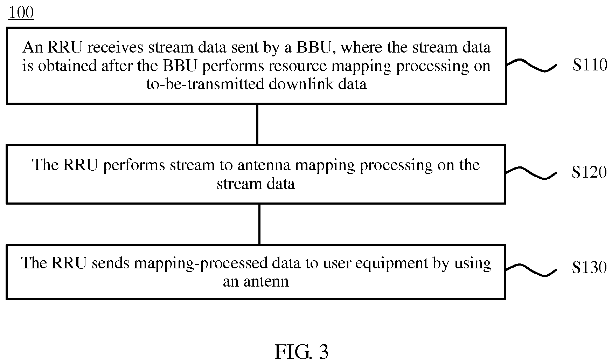

FIG. 3 shows a schematic flowchart of a data transmission method according to an embodiment of the present invention. The method is applied to a base station, and the base station includes a baseband unit BBU and a remote radio unit RRU. As shown in FIG. 3, the method 100 includes the following content:

S110. The RRU receives stream data sent by the BBU, where the stream data is obtained after the BBU performs resource mapping processing on to-be-transmitted downlink data.
S120. The RRU performs stream to antenna mapping processing on the stream data.
S130. The RRU sends mapping-processed data to user equipment by using an antenna.

In the data transmission method of this embodiment of the present invention, an RRU performs stream to antenna mapping processing in a downlink, and therefore service stream data is transmitted between a BBU and the RRU. This can reduce data traffic between the BBU and the RRU, so as to reduce fronthaul data bandwidth between the BBU and the RRU.

The method in this embodiment of the present invention may be applied to the following two scenarios. (I) Non-MIMO (in other words, transmission mode (Transmission mode, "TM" for short) 2, or TM3) scenario: In this scenario, data output after the BBU performs precoding processing is antenna data, and when performing the stream to antenna mapping (Stream to Antenna Mapping) processing on the stream data, the RRU does not change the stream data in any form, that is, the stream to antenna mapping processing is transmitting data transparently without mapping. (II) MIMO (in other words, TM4 to TM9) scenario: In this scenario, the RRU completes a precoding function when performing the stream to antenna mapping processing.

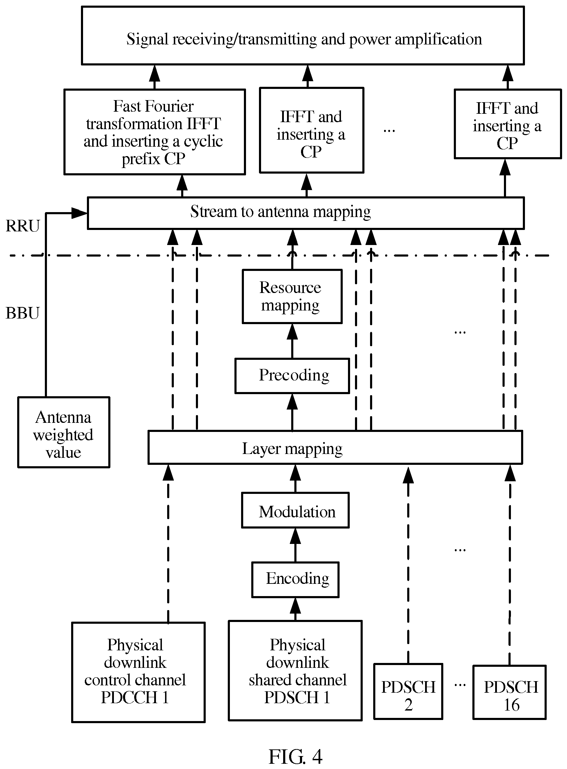

In a downlink, as shown in FIG. 4, a BBU may obtain stream data after successively performing encoder, modulation, layer mapping, and resource element mapping processing on physical downlink control channel (Physical Downlink Control Channel, "PDCCH" for short) data and physical downlink shared channel (Physical Downlink Shared Channel, "PDSCH" for short) data, and then sends the stream data to an RRU by using an interface between the BBU and the RRU. Accordingly, the RRU performs stream to antenna mapping processing on the stream data after receiving the stream data, and sends mapping-processed data to user equipment by using an antenna.

In this embodiment of the present invention, optionally, when the RRU sends the mapping-processed data to the user equipment by using the antenna, as shown in FIG. 4, the RRU performs inverse fast Fourier transformation IFFT processing and cyclic prefix CP insertion processing on the mapping-processed data, to obtain downlink data, and then sends the downlink data to the user equipment by using the antenna. In addition, the RRU may perform power amplification processing on the downlink data before sending the downlink data.

Before the RRU performs the stream to antenna mapping processing, the RRU may receive a downlink dynamic antenna weighted value sent by the BBU, and when performing the stream to antenna mapping processing, the RRU performs the processing according to the received downlink dynamic antenna weighted value. The downlink dynamic antenna weighted value may also be referred to as an "L1 antenna weighted value" or an "L1 weighted value", and the protection scope of the present invention is not limited to the name.

In an example, a process of performing the stream to antenna mapping processing by the RRU may be expressed as:

$$Y=WX \quad (1)$$

Y indicates data obtained after the stream to antenna mapping processing, and may be referred to as "physical antenna data"; X is stream data before the mapping processing, W indicates a downlink dynamic antenna weighted value for the stream to antenna mapping, and Y, X, and W may be respectively expressed as: $Y = \begin{bmatrix} y_1 \\ y_2 \\ \vdots \\ y_m \end{bmatrix}$, where m is a quantity of physical antennas; $X = \begin{bmatrix} x_1 \\ x_2 \\ \vdots \\ x_n \end{bmatrix}$, where n is a quantity of streams; and $W = \begin{bmatrix} w_{11} & \cdots & w_{1n} \\ \vdots & \ddots & \vdots \\ w_{m1} & \cdots & w_{mn} \end{bmatrix}$.

For example, in FIG. 4, after precoding, a PDCCH occupies two streams (Stream), a PDSCH occupies 16 streams, and therefore there are a total of 18 data streams between the BBU and the RRU. In addition, data traffic between the BBU and the RRU may be calculated according to the following manner:

Data traffic=N (quantity of data streams or referred to as a quantity of virtual antennas) × 1200 (quantity of subcarriers) × bit width (I and Q sampling bandwidth)/72 us (symbol duration);

and

data traffic of an antenna weighted value=100 (quantity of resource blocks (Resource Block, "RB" for short)) × M (quantity of physical antennas) × 32 bit (sampling bit width of an L1 antenna weighted value) × N/1 ms.

In addition, there may be the following control or scheduling information: information used to indicate that an overhead of user uplink/downlink RB allocation information is 1 byte/RB/millisecond; information used to indicate that an overhead of uplink/downlink channel antenna configuration information is 2 bytes/RB/millisecond; information used to indicate that an extra overhead brought by a packet assembly of scheduling and configuration information is 1 byte/RB/millisecond; and information used to indicate that required bandwidth is about (RB allocation information byte (1 byte) + antenna configuration information byte (1 byte) + scheduling and configuration information byte (0.5 bytes)) × quantity of RBs (100) × byte bit width (8 bit)/1 ms.

Optionally, in an uplink, the RRU performs antenna to stream mapping processing on data of the user equipment, and then sends mapping-processed data to the BBU.

In the data transmission method of this embodiment of the present invention, an RRU completes antenna to stream mapping processing, and therefore service stream data is transmitted between a BBU and the RRU. This can reduce data traffic between the BBU and the RRU, so as to reduce fronthaul data bandwidth between the BBU and the RRU.

Specifically, the RRU receives, by using the antenna, an uplink signal sent by the user equipment, where the uplink signal includes the data and a sounding reference signal (Sounding Reference Signal, "SRS" for short), separates the SRS and the data from the uplink signal, and sends the SRS to the BBU.

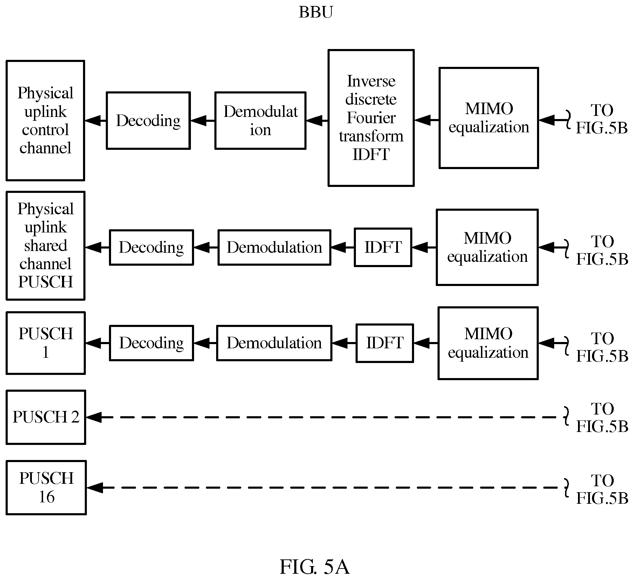

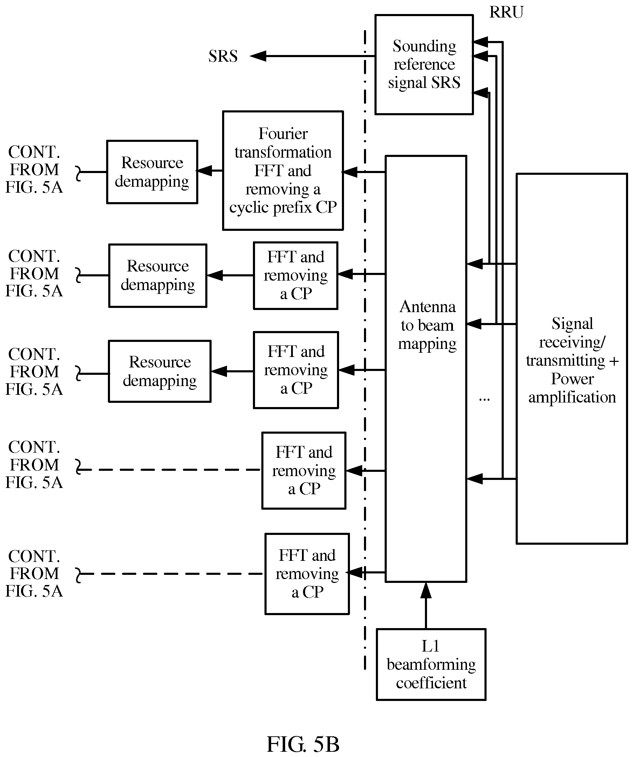

FIG. 5A and FIG. 5B show a data transmission method according to another specific embodiment of the present invention. In FIG. 5A and FIG. 5B, an RRU receives uplink data of user equipment, and separates, in a time domain, an SRS from data received by each physical antenna. Then, the SRS is separately transmitted to a BBU. Corresponding to FIG. 4, there are a total of 18 streams of public channel and user data, and data traffic between the RRU and the BBU may be calculated according to the following manner:

Time domain data traffic=quantity of beams (quantity of pieces of spatial multiplexing data) × sampling rate × (I bit width + Q bit width)/1000;

and

SRS traffic=96 (quantity of RBs) × 12 (quantity of subcarriers of each RB) × 30 bit (I + Q bit width) × quantity of physical antennas/67 us.

Correspondingly, after receiving data that is obtained after antenna to beam mapping (Antenna to Beam Mapping) processing and sent by the RRU, the BBU performs Fourier transformation FFT processing and cyclic prefix CP removing processing on the data, to obtain frequency domain data, and the BBU processes the frequency domain data to obtain uplink data. Specifically, as shown in FIG. 5A and FIG. 5B, the BBU successively performs resource element demapping, multiple-input multiple-output equalizer, inverse discrete Fourier transform (Inverse Discrete Fourier Transform, "IDFT" for short), demodulation, and decoder on the frequency domain data, to obtain the uplink data.

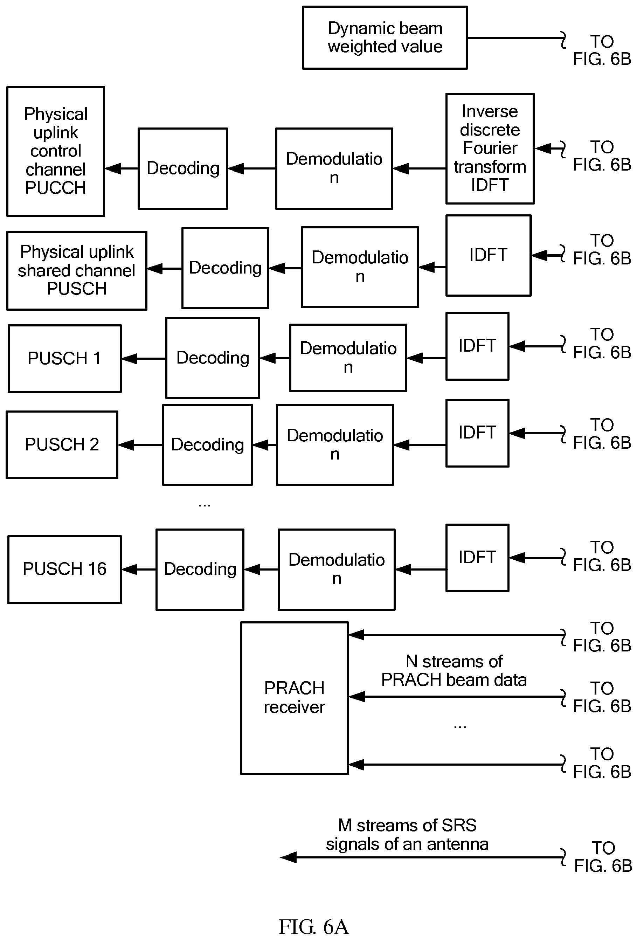

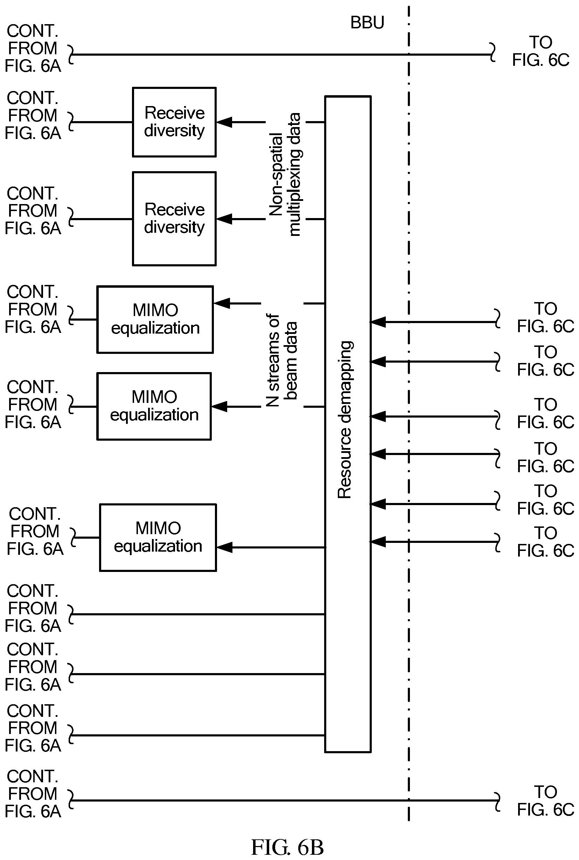

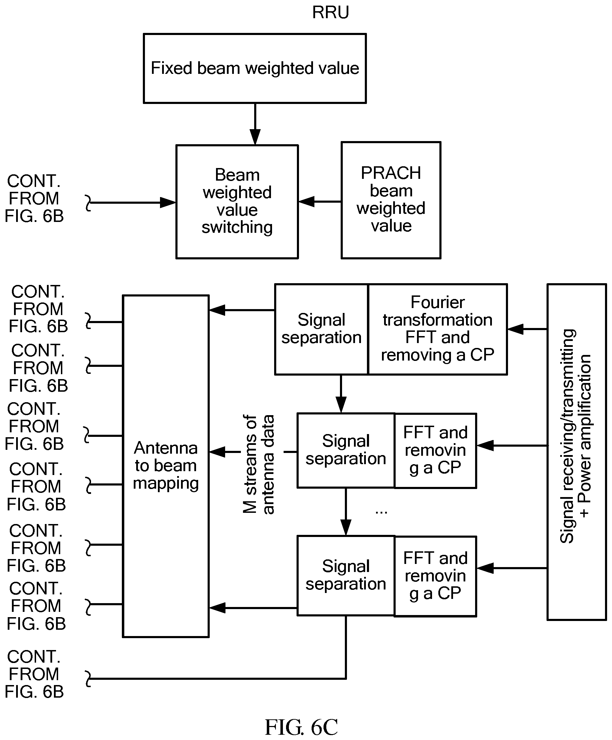

Optionally, in an example, as shown in FIG. 6A, FIG. 6B, and FIG. 6C, in an uplink, the RRU performs fast Fourier transformation FFT processing and cyclic prefix CP removing processing on an uplink signal, to obtain a frequency domain signal, and then separates the SRS and the data from the frequency domain signal.

Optionally, when receiving an uplink signal of the user equipment, the RRU may separate the SRS in a time domain, then performs FFT processing and processing of removing a CP on remaining data, to obtain the frequency domain data, then performs antenna to beam mapping processing on the frequency domain data, and sends mapping-processed data to the BBU.

Therefore, the data received by the BBU is data obtained after the antenna to beam mapping processing, and then the BBU successively performs resource element demapping, multiple-input multiple-output equalizer, IDFT, demodulation, and decoder on the received data obtained after the antenna to beam mapping processing, to obtain uplink data.

In this embodiment of the present invention, optionally, data on which the RRU performs the antenna to beam mapping processing includes non-spatial multiplexing data and spatial multiplexing data. The RRU may receive an uplink dynamic antenna weighted value sent by the BBU, performs antenna to beam mapping processing on the spatial multiplexing data according to the uplink dynamic antenna weighted value, and performs antenna to beam mapping processing on the non-spatial multiplexing data according to an uplink static antenna weighted value.

Optionally, the non-spatial multiplexing data includes public control channel data and user data, and the data may further include physical random access channel (Physical Random Access Channel, "PRACH" for short) data. For example, in FIG. 6A, FIG. 6B, and FIG. 6C, assuming that public control channel data and non-spatial multiplexing user data are single streams, spatial multiplexing user data is 16 streams, and a quantity of physical antennas is 64, after the RRU performs antenna to beam mapping processing, 64 streams of antenna data are converted into 16 streams of beam data, and then the RRU sends the 16 streams of beam data to the BBU.

Specifically, the 64 streams of antenna data include three types of data: non-spatial multiplexing public channel data and user data, PRACH data, and spatial multiplexing user data. Matrix architectures that are for antenna to beam mapping and of the three types of data are a same 64*16 matrix, and only uplink dynamic antenna weighted values (or referred to as "beam weighted values") inside the matrix are different. From the perspective of a frequency domain, the three types of data may be identified, that is, antenna to beam mapping is performed on different data by using different beam weighted values. For example, antenna to beam mapping is performed on the spatial multiplexing user data by using a dynamic beam weighted value, antenna to beam mapping is performed on non-spatial multiplexing public channel and user data by using a static (fixed) beam weighted value, antenna to beam mapping is performed on the PRACH data by using a PRACH beam weighted value, and finally, beam data is transmitted to a BBU side.

In addition, the dynamic beam weighted value is generated in the BBU, and then is transmitted from the BBU to the RRU. The fixed beam weighted value and the PRACH beam weighted value are generated in the RRU, for example, the fixed beam weighted value and the PARACH beam weighted value may be pre-configured in the RRU.

At the BBU side, after resource element demapping processing is performed on the beam data, the non-spatial multiplexing public channel data and user data, the PRACH data, and the spatial multiplexing user data are separated and transmitted to respective receivers for corresponding processing.

In an uplink, data traffic between the RRU and the BBU may be calculated according to the following method:

Data traffic=J (quantity of ports (Port)) × 1200 × 30 bits (I + Q bit width)/67 us (symbol time);

SRS data traffic: 96 (quantity of RBs) * 12 (quantity of subcarriers of each RB) * 30 bit (I + Q bit width) * M (quantity of physical antennas)/67 us;

forming coefficient: J × 25 (resource block group (RBG)) × M × 30 bit (forming coefficient bit width);

and

PRACH data traffic: 6 (quantity of RBs) × 12 (quantity of subcarriers) × 30 bit (I + Q bit width) × quantity of uplink PRACH streams/67 us.

In the data transmission method of this embodiment of the present invention, an RRU performs antenna to stream mapping processing in a downlink. The RRU performs antenna to beam mapping processing in an uplink, and therefore service stream data is transmitted between a BBU and the RRU. This can reduce data traffic between the BBU and the RRU, so as to reduce fronthaul data bandwidth between the BBU and the RRU.

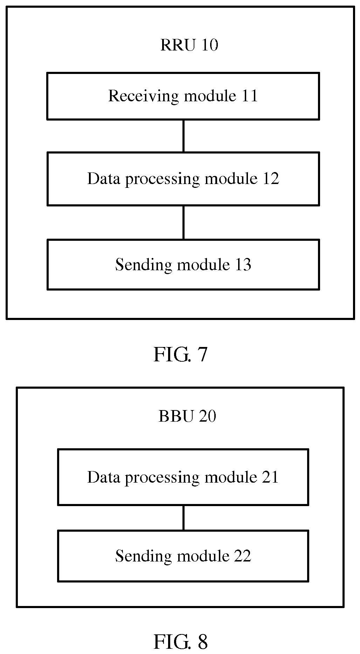

The foregoing describes in detail a data transmission method according to embodiments of the present invention with reference to FIG. 3 to FIG. 6A, FIG. 6B, and FIG. 6C, and the following describes in detail an RRU 10 according to the embodiments of the present invention with reference to FIG. 7 to FIG. 10.

FIG. 7 shows an RRU 10 according to an embodiment of the present invention, and the RRU 10 includes:

a receiving module 11, configured to receive stream data sent by a BBU, where the stream data is obtained after the BBU performs resource mapping processing on to-be-transmitted downlink data;
a data processing module 12, configured to perform stream to antenna mapping processing on the stream data; and
a sending module 13, configured to send mapping-processed data to user equipment by using an antenna.

The RRU in this embodiment of the present invention completes stream to antenna mapping processing in a downlink, and therefore service stream data is transmitted between a BBU and the RRU. This can reduce data traffic between the BBU and the RRU, so as to reduce fronthaul data bandwidth between the BBU and the RRU.

Optionally, in this embodiment of the present invention, the data processing module 12 is further configured to:

perform inverse fast Fourier transformation IFFT processing and cyclic prefix CP insertion processing on the mapping-processed data, to obtain downlink data; and
the sending module 13 is specifically configured to send the downlink data to the user equipment by using the antenna.

Optionally, in this embodiment of the present invention, the receiving module 11 is further configured to receive a downlink dynamic antenna weighted value sent by the BBU; and
the data processing module 12 is specifically configured to perform the stream to antenna mapping processing on the stream data according to the downlink dynamic antenna weighted value.

Optionally, in this embodiment of the present invention, the data processing module 12 is further configured to perform antenna to beam mapping processing on data of the user equipment; and
the sending module 13 is configured to send mapping-processed data to the BBU.

Optionally, in this embodiment of the present invention, the receiving module 11 is specifically configured to receive, by using the antenna, an uplink signal sent by the user equipment, where the uplink signal includes the data and a sounding reference signal SRS;
the data processing module 12 is further configured to separate the SRS and the data from the uplink signal; and
the sending module 13 is further configured to send the SRS to the BBU.

Optionally, in this embodiment of the present invention, the data processing module 12 is specifically configured to: perform fast Fourier transformation FFT processing and cyclic prefix CP removing processing on the uplink signal, to obtain a frequency domain signal; and separate the SRS and the data from the frequency domain signal.

Optionally, in this embodiment of the present invention, the data includes non-spatial multiplexing data and spatial multiplexing data;

the receiving module 11 is further configured to receive an uplink dynamic antenna weighted value sent by the BBU;

the data processing module 12 is configured to perform antenna to stream mapping processing on the spatial multiplexing data according to the uplink dynamic antenna weighted value; and

the data processing module 12 is further configured to perform antenna to stream mapping processing on the non-spatial multiplexing data according to an uplink static antenna weighted value.

It should be understood that the RRU 10 herein is embodied in a form of a functional module. Herein, the term "module" may refer to an application-specific integrated circuit (Application Specific Integrated Circuit, "ASIC" for short), an electronic circuit, a processor configured to execute one or more software or firmware programs (such as a shared processor, a dedicated processor, or a group processor), a memory, a merged logic circuit, and/or another proper component supporting the described functions. In an optional example, a person skilled in the art may understand that the RRU 10 may be configured to execute processes and/or steps executed by an RRU in the method 100 in the foregoing method embodiment. To avoid repetition, details are not described herein.

FIG. 8 shows a BBU 20 according to an embodiment of the present invention, and as shown in FIG. 8, the BBU 20 includes:

a data processing module 21, configured to perform resource mapping processing on to-be-transmitted downlink data to obtain stream data; and

a sending module 22, configured to send the stream data to an RRU, so that the RRU performs stream to antenna mapping processing on the stream data, and sends mapping-processed data to user equipment by using an antenna.

The BBU in this embodiment of the present invention sends stream data to an RRU in a downlink, and then the RRU completes stream to antenna mapping processing. This can reduce data traffic between the BBU and the RRU, so as to reduce fronthaul data bandwidth between the BBU and the RRU.

Optionally, in this embodiment of the present invention, the data processing module 21 is further configured to determine a downlink dynamic antenna weighted value; and

the sending module 22 is further configured to send the downlink dynamic antenna weighted value to the RRU, so that the RRU performs the stream to antenna mapping processing on the stream data according to the downlink dynamic antenna weighted value.

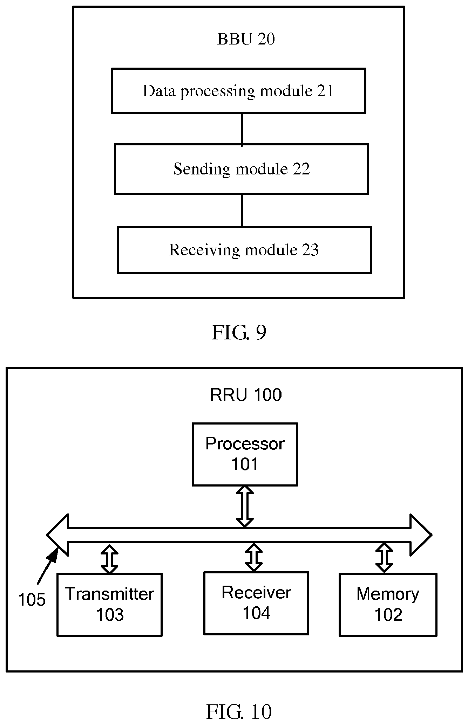

Optionally, in this embodiment of the present invention, as shown in FIG. 9, the BBU 20 further includes:

a receiving module 23, configured to receive data sent by the RRU, where the data is obtained after the RRU performs antenna to beam mapping processing on data of the user equipment; and

the data processing module 21 is configured to process the data to obtain uplink data.

Optionally, in this embodiment of the present invention, the receiving module 23 is further configured to: receive a sounding reference signal SRS sent by the RRU.

Optionally, in this embodiment of the present invention, the data processing module 21 is specifically configured to:

obtain frequency domain data after performing Fourier transformation FFT processing and cyclic prefix CP removing processing on the data; and

process the frequency domain data to obtain the uplink data.

Optionally, in this embodiment of the present invention, the data includes non-spatial multiplexing data and spatial multiplexing data;

the data processing module 21 is further configured to determine an uplink dynamic antenna weighted value; and

the sending module 22 is further configured to send the uplink dynamic antenna weighted value to the RRU, so that the RRU performs antenna to beam mapping processing on the spatial multiplexing data according to the uplink dynamic antenna weighted value.

It should be understood that the BBU 20 herein is embodied in a form of a functional module. Herein, the term "module" may refer to an application-specific integrated circuit (Application Specific Integrated Circuit, "ASIC" for short), an electronic circuit, a processor configured to execute one or more software or firmware programs (such as a shared processor, a dedicated processor, or a group processor), a memory, a merged logic circuit, and/or another proper component supporting the described functions. In an optional example, a person skilled in the art may understand that the BBU 20 may be configured to execute processes and/or steps executed by a BBU in the method 100 in the foregoing method embodiment. To avoid repetition, details are not described herein.

FIG. 10 shows an RRU 100 according to still another embodiment of the present invention. The RRU 100 includes a processor 101, a memory 102, a transmitter 103, a receiver 104, and a bus system 105. The processor 101, the memory 102, the transmitter 103, and the receiver 104 are connected by using the bus system 105. The memory 102 is configured to store an instruction, and the processor 101 is configured to execute the instruction stored by the memory 102, so that the RRU 100 executes steps executed by an RRU in the foregoing method 100. For example:

The receiver 104 is configured to receive stream data sent by a BBU, where the stream data is obtained after the BBU performs resource mapping processing on to-be-transmitted downlink;

the processor 101 is configured to perform stream to antenna mapping processing on the stream data; and

the transmitter 103 is configured to send mapping-processed data to user equipment by using an antenna.

The RRU in this embodiment of the present invention completes stream to antenna mapping processing in a downlink, and therefore service stream data is transmitted between a BBU and the RRU. This can reduce data traffic between the BBU and the RRU, so as to reduce fronthaul data bandwidth between the BBU and the RRU.

It should be understood that in this embodiment of the present invention, optionally, the processor 101 may be a central processing unit (Central Processing Unit, CPU for short), or the processor 101 may be another general purpose processor, a digital signal processor (Digital Signal Processing, DSP for short), an application-specific integrated circuit (Application Specific Integrated Circuit, ASIC for short), a field programmable gate array (Field-Programmable Gate Array, FPGA for short) or another programmable logic device, a discrete gate or transistor logic device, a discrete hardware component, or the like. The general purpose processor may be a microprocessor, or the processor may be any normal processor or the like.

Optionally, the processor 101 may also be a dedicated processor, and the dedicated processor may include at least one of a baseband processing chip, a radio frequency processing chip, or the like. Further, the dedicated processor may further include a chip with another dedicated processing function of a base station.

The memory 102 may include a read-only memory and a random access memory, and provides an instruction and data for the processor 101. A part of the memory 102 may further include a nonvolatile random access memory. For example, the memory 102 may further store information about a device type.

In addition to a data bus, the bus system 105 may further include a power bus, a control bus, a status signal bus, and the like. However, for clarity of description, various buses are marked as the bus system 105 in the figure.

In an implementation process, the steps in the foregoing method may be executed by using an integrated logic circuit of hardware in the processor 101 or an instruction in a software form. The steps of the method disclosed with reference to the embodiments of the present invention may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically-erasable programmable memory, or a register. The storage medium is located in the memory 102. The processor 101 reads information from the memory 102, and completes the steps of the foregoing method in combination with the hardware. To avoid repetition, details are not described herein.

Optionally, in an embodiment, the processor 101 is further configured to:

perform inverse fast Fourier transformation IFFT processing and cyclic prefix CP insertion processing on the mapping-processed data, to obtain downlink data; and

the transmitter 103 is specifically configured to send the downlink data to the user equipment by using the antenna.

Optionally, in an embodiment, the receiver 104 is further configured to receive a downlink dynamic antenna weighted value sent by the BBU; and

the processor 101 is specifically configured to perform the stream to antenna mapping processing on the stream data according to the downlink dynamic antenna weighted value.

Optionally, in an embodiment, the processor 101 is further configured to perform antenna to beam mapping processing on data of the user equipment; and

the transmitter 103 is configured to send mapping-processed data to the BBU.

Optionally, in an embodiment, the receiver 104 is specifically configured to receive, by using the antenna, an uplink signal sent by the user equipment, where the uplink signal includes the data and a sounding reference signal SRS;

the processor 101 is further configured to separate the SRS and the data from the uplink signal; and

the transmitter 103 is further configured to send the SRS to the BBU.

Optionally, in an embodiment, the processor 101 is specifically configured to: perform fast Fourier transformation FFT processing and cyclic prefix CP removing processing on the uplink signal, to obtain a frequency domain signal; and separate the SRS and the data from the frequency domain signal.

Optionally, in an embodiment, the data includes non-spatial multiplexing data and spatial multiplexing data;
the receiver 104 is further configured to receive an uplink dynamic antenna weighted value sent by the BBU;
the processor 101 is configured to perform antenna to beam mapping processing on the spatial multiplexing data according to the uplink dynamic antenna weighted value; and
the processor 101 is further configured to perform antenna to beam mapping processing on the non-spatial multiplexing data according to an uplink static antenna weighted value.

The RRU in this embodiment of the present invention performs antenna to stream mapping processing in a downlink, and performs antenna to beam mapping processing in an uplink, and therefore service stream data is transmitted between a BBU and the RRU. This can reduce data traffic between the BBU and the RRU, so as to reduce fronthaul data bandwidth between the BBU and the RRU.

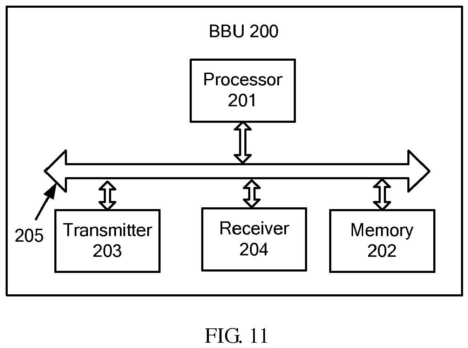

FIG. 11 shows a BBU 200 according to still another embodiment of the present invention. The BBU 200 includes a processor 201, a memory 202, a transmitter 203, a receiver 204, and a bus system 205. The processor 201, the memory 202, the transmitter 203, and the receiver 204 are connected by using the bus system 205. The memory 202 is configured to store an instruction, and the processor 201 is configured to execute the instruction stored by the memory 202, so that the BBU 200 executes steps executed by a BBU in the foregoing method 100. For example:

The processor 201 is configured to perform resource mapping processing on to-be-transmitted downlink data to obtain stream data; and
the transmitter 203 is configured to send the stream data to an RRU, so that the RRU performs stream to antenna mapping processing on the stream data, and sends mapping-processed data to user equipment by using an antenna.

The BBU in this embodiment of the present invention sends stream data to an RRU in a downlink, and then the RRU completes stream to antenna mapping processing. This can reduce data traffic between the BBU and the RRU, so as to reduce fronthaul data bandwidth between the BBU and the RRU.

It should be understood that in this embodiment of the present invention, optionally, the processor 201 may be a central processing unit (Central Processing Unit, CPU for short), or the processor 201 may be another general purpose processor, a digital signal processor (Digital Signal Processing, DSP for short), an application-specific integrated circuit (Application Specific Integrated Circuit, ASIC for short), a field programmable gate array (Field-Programmable Gate Array, FPGA for short) or another programmable logic device, a discrete gate or transistor logic device, a discrete hardware component, or the like. The general purpose processor may be a microprocessor, or the processor may be any normal processor or the like.

Optionally, the processor 201 may also be a dedicated processor, and the dedicated processor may include at least one of a baseband processing chip, a radio frequency processing chip, or the like. Further, the dedicated processor may further include a chip with another dedicated processing function of a base station.

The memory 202 may include a read-only memory and a random access memory, and provides an instruction and data for the processor 201. A part of the memory 202 may further include a nonvolatile random access memory. For example, the memory 202 may further store information about a device type.

In addition to a data bus, the bus system 205 may further include a power bus, a control bus, a status signal bus, and the like. However, for clarity of description, various buses are marked as the bus system 205 in the figure.

In an implementation process, the steps in the foregoing method may be executed by using an integrated logic circuit of hardware in the processor 201 or an instruction in a software form. The steps of the method disclosed with reference to the embodiments of the present invention may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically-erasable programmable memory, or a register. The storage medium is located in the memory 202. The processor 201 reads information from the memory 202, and completes the steps of the foregoing method in combination with the hardware. To avoid repetition, details are not described herein.

Optionally, the processor 201 is further configured to determine a downlink dynamic antenna weighted value; and the transmitter 203 is further configured to send the downlink dynamic antenna weighted value to the RRU, so that the RRU performs the stream to antenna mapping processing on the stream data according to the downlink dynamic antenna weighted value.

Optionally, in an embodiment, the receiver 204 is configured to receive data sent by the RRU, where the data is obtained after the RRU performs antenna to beam mapping processing on data of the user equipment; and the processor 201 is configured to process the data to obtain uplink data.

Optionally, in an embodiment, the receiver 204 is further configured to receive a sounding reference signal SRS sent by the RRU.

Optionally, in an embodiment, the processor 201 is specifically configured to: obtain frequency domain data after performing Fourier transformation FFT processing and cyclic prefix CP removing processing on the data; and process the frequency domain data to obtain the uplink data.

Optionally, in an embodiment, the data includes non-spatial multiplexing data and spatial multiplexing data; the processor 201 is further configured to determine an uplink dynamic antenna weighted value; and

the transmitter 203 is further configured to send the uplink dynamic antenna weighted value to the RRU, so that the RRU performs antenna to beam mapping processing on the spatial multiplexing data according to the uplink dynamic antenna weighted value.

The BBU in this embodiment of the present invention sends stream data to an RRU in a downlink, and then the RRU completes stream to antenna mapping processing. In an uplink, the BBU receives beam data obtained after the RRU performs antenna to beam mapping processing. This can reduce data traffic between the BBU and the RRU, so as to reduce fronthaul data bandwidth between the BBU and the RRU.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, reference may be made to a corresponding process in the foregoing method embodiments, and details are not described.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention which is defined by the appended claims. Therefore, the protection scope of the present invention shall be subject to the protection scope of the claims.

**Claims**

1. A data transmission method, wherein the method is applied to a base station, the base station comprises a baseband unit, BBU, and a remote radio unit, RRU, and the method comprises:

   receiving (110), by the RRU, stream data sent by the BBU, wherein the stream data is obtained after the BBU performs resource mapping processing on to-be-transmitted downlink data, wherein performing resource mapping processing includes successively performing encoder, modulation, layer mapping and resource element mapping;
   performing (120), by the RRU, stream to antenna mapping processing on the stream data; and
   sending (130), by the RRU, mapping-processed data to user equipment by using an antenna;

wherein the method further comprises:

receiving, by the RRU by using the antenna, an uplink signal sent by the user equipment, wherein the uplink signal comprises uplink data and a sounding reference signal, SRS;
separating, by the RRU, the SRS and the uplink data from the uplink signal;
performing, by the RRU, antenna to beam mapping processing on uplink data of the user equipment; and
sending separately, by the RRU, beam-mapping-processed data and the SRS to the BBU.

2. The method according to claim 1, wherein the sending, by the RRU, mapping-processed data to user equipment by using an antenna comprises:

performing, by the RRU, inverse fast Fourier transformation, IFFT, processing and cyclic prefix, CP, insertion processing on the mapping-processed data, to obtain downlink data; and
sending, by the RRU, the downlink data to the user equipment by using the antenna.

3. The method according to claim 1 or 2, wherein the method further comprises:

receiving, by the RRU, a downlink dynamic antenna weighted value sent by the BBU; and
the performing, by the RRU, stream to antenna mapping processing on the stream data comprises:
performing, by the RRU, the stream to antenna mapping processing on the stream data according to the downlink dynamic antenna weighted value.

4. A remote radio unit, RRU, wherein the RRU is applied to a base station, the base station comprises a baseband unit, BBU, and the RRU, and the RRU comprises:

a receiving module (11), configured to receive stream data sent by the BBU, wherein the stream data is obtained after the BBU performs resource mapping processing on to-be-transmitted downlink data, wherein performing resource mapping processing includes successively performing encoder, modulation, layer mapping and resource element mapping;
a data processing module (12), configured to perform stream to antenna mapping processing on the stream data; and
a sending module (13), configured to send mapping-processed data to user equipment by using an antenna;
wherein the receiving module (11) is specifically configured to:

receive, by using the antenna, an uplink signal sent by the user equipment, wherein the uplink signal comprises uplink data and a sounding reference signal, SRS;
wherein the data processing module (12) is further configured to:

separate the SRS and the uplink data from the uplink signal and perform antenna to beam mapping processing on the uplink data of the user equipment; and
the sending module (13) is further configured to:
send separately beam-mapping-processed data and the SRS to the BBU.

5. The RRU according to claim 4, wherein the data processing module (12) is further configured to:

perform inverse fast Fourier transformation, IFFT, processing and cyclic prefix, CP, insertion processing on the mapping-processed data, to obtain downlink data; and
the sending module (13) is specifically configured to:
send the downlink data to the user equipment by using the antenna.

6. The RRU according to claim 4 or 5, wherein the receiving module (11) is further configured to:

receive a downlink dynamic antenna weighted value sent by the BBU; and
the data processing module (12) is specifically configured to:
perform the stream to antenna mapping processing on the stream data according to the downlink dynamic antenna weighted value.

7. A baseband unit, BBU, wherein the BBU is applied to a base station, the base station comprises the BBU and a remote radio unit, RRU, and the BBU comprises:

a data processing module (21), configured to perform resource mapping processing on to-be-transmitted downlink data to obtain stream data, wherein performing resource mapping processing includes successively performing encoder, modulation, layer mapping and resource element mapping; and
a sending module (22), configured to send the stream data to the RRU, so that the RRU performs stream to antenna mapping processing on the stream data, and sends mapping-processed data to user equipment by using an antenna;
wherein the BBU further comprises:

a receiving module (23), configured to receive separately uplink stream data and a sounding reference signal, SRS sent by the RRU, wherein the uplink stream data and the SRS are obtained after the RRU separates the SRS and uplink data from the uplink signal and performs antenna to beam mapping processing on the uplink data of the user equipment to obtain uplink stream data; and
the data processing module (21) is further configured to:
process the uplink stream data.

8. The BBU according to claim 7, wherein the data processing module (21) is further configured to:

determine a downlink dynamic antenna weighted value; and
the sending module is further configured to:
send the downlink dynamic antenna weighted value to the RRU, so that the RRU performs the stream to antenna mapping processing on the stream data according to the downlink dynamic antenna weighted value.

9. The BBU according to claim 7 or 8, wherein the data processing module (21) is specifically configured to:

obtain frequency domain data after performing Fourier transformation, FFT, processing and cyclic prefix, CP, removing processing on the uplink stream data; and
process the frequency domain data to obtain the uplink data.

## Patentansprüche

1. Datenübertragungsverfahren, wobei das Verfahren auf eine Basisstation angewendet wird, wobei die Basisstation eine Basisbandeinheit ("baseband unit", BBU) sowie eine entfernte Funkeinheit ("remote radio unit", RRU) umfasst, und wobei das Verfahren Folgendes umfasst:

Empfangen (110), durch die RRU, von durch die BBU gesendeten Datenstromdaten, wobei die Datenstromdaten erlangt werden, nachdem die BBU Ressourcenzuordnungsverarbeitung an den zu übertragenden Downlink-Daten durchführt, wobei das Durchführen der Ressourcenzuordnungsverarbeitung das aufeinanderfolgende Durchführen von Codierer, Modulation, Ebenenzuordnung und Ressourcenelementzuordnung einschließt;
Durchführen (120), durch die RRU, der Verarbeitung von Datenstrom-zu-Antenne-Zuordnung an den Datenstromdaten; und
Senden (130), durch die RRU, zuordnungsverarbeiteter Daten an ein Benutzergerät durch Nutzung einer Antenne;
wobei das Verfahren außerdem Folgendes umfasst:

Empfangen, durch die RRU durch Nutzung einer Antenne, eines vom Benutzergerät gesendeten Uplink-Signals, wobei das Uplink-Signal Uplink-Daten und ein Sondierungsreferenzsignal ("sounding reference signal", SRS) umfasst;
Trennen, durch die RRU, des SRS und der Uplink-Daten vom Uplink-Signal;
Durchführen, durch die RRU, einer Verarbeitung von Antenne-zu-Strahl-Zuordnung an Uplink-Daten des Benutzergeräts; und
getrenntes Senden, durch die RRU, von strahlzuordnungsverarbeiteten Daten und des SRS an die BBU.

2. Verfahren nach Anspruch 1, wobei das Senden von zuordnungsverarbeiteten Daten an ein Benutzergerät durch die RRU durch Nutzung einer Antenne Folgendes umfasst:

Durchführen, durch die RRU, von IFFT-Verarbeitung ("inverse fast Fourier transformation", IFFT (inverse schnelle Fourier-Transformation)) sowie Einfügungsverarbeitung des CP ("cyclic prefix", CP, (zyklischer Präfix)) an den zuordnungsverarbeiteten Daten, um Downlink-Daten zu erlangen; und

Senden, durch die RRU, der Downlink-Daten an das Benutzergerät durch Nutzung der Antenne.

**3.** Verfahren nach Anspruch 1 oder 2, wobei das Verfahren außerdem Folgendes umfasst:

Empfangen, durch die RRU, eines von der BBU gesendeten gewichteten Werts der dynamischen Downlink-Antenne; und

wobei das Durchführen, durch die RRU, der Verarbeitung von Datenstrom-zu-Antenne-Zuordnung an den Datenstromdaten Folgendes umfasst:

Durchführen, durch die RRU, der Verarbeitung von Datenstrom-zu-Antenne-Zuordnung an den Datenstromdaten gemäß dem gewichteten Wert der dynamischen Downlink-Antenne.

**4.** Entfernte Funkeinheit ("remote radio unit", RRU), wobei die RRU in einer Basisstation eingesetzt wird, wobei die Basisstation eine Basisbandeinheit ("baseband unit", BBU) sowie die RRU umfasst, und wobei die RRU Folgendes umfasst:

ein Empfangsmodul (11), welches dafür eingerichtet ist, von der BBU gesendete Datenstromdaten zu empfangen, wobei die Datenstromdaten erlangt werden, nachdem die BBU Ressourcenzuordnungsverarbeitung an den zu übertragenden Downlink-Daten durchführt, wobei das Durchführen der Ressourcenzuordnungsverarbeitung das aufeinanderfolgende Durchführen von Codierer, Modulation, Ebenenzuordnung und Ressourcenelementzuordnung einschließt;

ein Datenverarbeitungsmodul (12), welches dafür eingerichtet ist, die Verarbeitung von Datenstrom-zu-Antenne-Zuordnung an den Datenstromdaten durchzuführen; und

ein Sendemodul (13), welches dafür eingerichtet ist, zuordnungsverarbeitete Daten an ein Benutzergerät durch Nutzung einer Antenne zu senden;

wobei das Empfangsmodul (11) im Besonderen für Folgendes eingerichtet ist:

Empfangen, durch Nutzung einer Antenne, eines vom Benutzergerät gesendeten Uplink-Signals, wobei das Uplink-Signal Uplink-Daten und ein Sondierungsreferenzsignal ("sounding reference signal", SRS) umfasst;

wobei das Datenverarbeitungsmodul (12) außerdem für Folgendes eingerichtet ist:

Trennen des SRS und der Uplink-Daten vom Uplink-Signal und Durchführen einer Verarbeitung von Antenne-zu-Strahl-Zuordnung an Uplink-Daten des Benutzergeräts; und

wobei das Sendemodul (13) außerdem für Folgendes eingerichtet ist:

getrenntes Senden von strahlzuordnungsverarbeiteten Daten und des SRS an die BBU.

**5.** RRU nach Anspruch 4, wobei das Datenverarbeitungsmodul (12) außerdem für Folgendes eingerichtet ist:

Durchführen von IFFT-Verarbeitung ("inverse fast Fourier transformation", IFFT (inverse schnelle Fourier-Transformation)) sowie Einfügungsverarbeitung des CP ("cyclic prefix", CP, (zyklischer Präfix)) an den zuordnungsverarbeiteten Daten, um Downlink-Daten zu erlangen; und

wobei das Sendemodul (13) im Besonderen für Folgendes eingerichtet ist:

Senden der Downlink-Daten an das Benutzergerät durch Nutzung der Antenne.

**6.** RRU nach Anspruch 4 oder 5, wobei das Empfangsmodul (11) außerdem für Folgendes eingerichtet ist:

Empfangen eines von der BBU gesendeten gewichteten Werts der dynamischen Downlink-Antenne; und

wobei das Datenverarbeitungsmodul (12) im Besonderen für Folgendes eingerichtet ist:

Durchführen der Verarbeitung von Datenstrom-zu-Antenne-Zuordnung an den Datenstromdaten gemäß dem gewichteten Wert der dynamischen Downlink-Antenne.

**7.** Basisbandeinheit, BBU, wobei die BBU in einer Basisstation eingesetzt wird, wobei die Basisstation die BBU sowie eine entfernte Funkeinheit ("remote radio unit", RRU) umfasst, und wobei die BBU Folgendes umfasst:

ein Datenverarbeitungsmodul (21), welches dafür eingerichtet ist, Ressourcenzuordnungsverarbeitung an den zu übertragenden Downlink-Daten durchzuführen, um Datenstromdaten zu erlangen, wobei das Durchführen der Ressourcenzuordnungsverarbeitung das aufeinanderfolgende Durchführen von Codierer, Modulation, Ebenenzuordnung und Ressourcenelementzuordnung einschließt; und

ein Sendemodul (22), welches dafür eingerichtet ist, die Datenstromdaten an die RRU zu senden, damit die RRU Verarbeitung von Datenstrom-zu-Antenne-Zuordnung an den Datenstromdaten durchführt und zuordnungsverarbeitete Daten an ein Benutzergerät durch Nutzung einer Antenne sendet;
wobei die BBU außerdem Folgendes umfasst:

ein Empfangsmodul (23), welches dafür eingerichtet ist, von der RRU gesendete Uplink-Datenstromdaten und ein Sondierungsreferenzsignal ("sounding reference signal", SRS) getrennt zu empfangen, wobei die Uplink-Datenstromdaten und das SRS erlangt werden, nachdem die RRU das SRS und Uplink-Daten vom Uplink-Signal trennt und eine Verarbeitung von Antenne-zu-Strahl-Zuordnung an den Uplink-Daten des Benutzergeräts durchführt, um Uplink-Datenstromdaten zu erlangen; und
wobei das Datenverarbeitungsmodul (21) außerdem für Folgendes eingerichtet ist:
Verarbeiten der Uplink-Datenstromdaten.

**8.** BBU nach Anspruch 7, wobei das Datenverarbeitungsmodul (21) außerdem für Folgendes eingerichtet ist:

Bestimmen eines gewichteten Werts der dynamischen Downlink-Antenne; und
wobei das Sendemodul außerdem für Folgendes eingerichtet ist:
Senden des gewichteten Werts der dynamischen Downlink-Antenne an die RRU, damit die RRU die Verarbeitung von Datenstrom-zu-Antenne-Zuordnung an den Datenstromdaten gemäß dem gewichteten Wert der dynamischen Downlink-Antenne durchführt.

**9.** BBU nach Anspruch 7 oder 8, wobei das Datenverarbeitungsmodul (21) im Besonderen für Folgendes eingerichtet ist:

Erlangen von Frequenzbereichsdaten nach Durchführen von FFT-Verarbeitung ("Fourier transformation", FFT) und Verarbeitung der CP-Entfernung ("cyclic prefix", CP) an den Uplink-Datenstromdaten; und
Verarbeiten der Frequenzbereichsdaten, um die Uplink-Daten zu erlangen.

## Revendications

**1.** Procédé de transmission de données, le procédé étant appliqué à une station de base, la station de base comprenant une unité en bande de base (BBU) et une unité radio distante (RRU), et le procédé consistant à :

recevoir (110), par la RRU, des données de diffusion envoyées par la BBU, les données de diffusion étant obtenues après la réalisation, par la BBU, d'un traitement de mise en correspondance de ressources sur des données en liaison descendante à transmettre, la réalisation d'un traitement de mise en correspondance de ressources consistant à réaliser successivement un codage, une modulation, une mise en correspondance de couches et une mise en correspondance d'éléments de ressource ;
réaliser (120), par la RRU, un traitement de mise en correspondance diffusion-antenne sur les données de diffusion ; et
envoyer (130), par la RRU, des données traitées par mise en correspondance à un équipement d'utilisateur au moyen d'une antenne ;
le procédé consistant en outre à :

recevoir, par la RRU au moyen de l'antenne, un signal en liaison montante envoyé par l'équipement d'utilisateur, le signal en liaison montante comprenant des données en liaison montante et un signal de référence de sondage (SRS) ;
séparer, par la RRU, le SRS et les données en liaison montante du signal en liaison montante ;
réaliser, par la RRU, un traitement de mise en correspondance antenne-diffusion sur des données en liaison montante de l'équipement d'utilisateur ; et
envoyer séparément, par la RRU, des données traitées par mise en correspondance de faisceaux et le SRS à la BBU.

**2.** Procédé selon la revendication 1, dans lequel l'envoi, par la RRU, de données traitées par mise en correspondance à un équipement d'utilisateur au moyen d'une antenne, consiste à :

réaliser, par la RRU, un traitement par transformée de Fourier rapide inverse (IFFT) et un traitement d'insertion de préfixe cyclique (CP) sur les données traitées par mise en correspondance, afin d'obtenir des données en liaison descendante ; et

envoyer, par la RRU, les données en liaison descendante à l'équipement d'utilisateur au moyen de l'antenne.

3. Procédé selon la revendication 1 ou 2, le procédé consistant en outre à :

recevoir, par la RRU, une valeur pondérée d'antenne dynamique en liaison descendante envoyée par la BBU ; et

la réalisation, par la RRU, d'un traitement de mise en correspondance diffusion-antenne sur les données de diffusion, consistant à :

réaliser, par la RRU, le traitement de mise en correspondance diffusion-antenne sur les données de diffusion selon la valeur pondérée d'antenne dynamique en liaison descendante.

4. Unité radio distante (RRU), la RRU étant appliquée à une station de base, la station de base comprenant une unité en bande de base (BBU) et la RRU, et la RRU comprenant :

un module de réception (11), configuré pour recevoir des données de diffusion envoyées par la BBU, les données de diffusion étant obtenues après la réalisation, par la BBU, d'un traitement de mise en correspondance de ressources sur des données en liaison descendante à transmettre, la réalisation d'un traitement de mise en correspondance de ressources consistant à réaliser successivement un codage, une modulation, une mise en correspondance de couches et une mise en correspondance d'éléments de ressource ;

un module de traitement de données (12), configuré pour réaliser un traitement de mise en correspondance diffusion-antenne sur les données de diffusion ; et

un module d'envoi (13), configuré pour envoyer des données traitées par mise en correspondance à un équipement d'utilisateur au moyen d'une antenne ;

le module de réception (11) étant spécifiquement configuré pour :

recevoir, au moyen de l'antenne, un signal en liaison montante envoyé par l'équipement d'utilisateur, le signal en liaison montante comprenant des données en liaison montante et un signal de référence de sondage (SRS) ;

le module de traitement de données (12) étant en outre configuré pour :

séparer le SRS et les données en liaison montante du signal en liaison montante, et réaliser un traitement de mise en correspondance antenne-diffusion sur des données en liaison montante de l'équipement d'utilisateur ; et

le module d'envoi (13) étant en outre configuré pour :

envoyer séparément des données traitées par mise en correspondance de faisceaux et le SRS à la BBU.

5. RRU selon la revendication 4, dans laquelle le module de traitement de données (12) est en outre configuré pour :
réaliser un traitement par transformée de Fourier rapide inverse (IFFT) et un traitement d'insertion de préfixe cyclique (CP) sur les données traitées par mise en correspondance, afin d'obtenir des données en liaison descendante ; et
le module d'envoi (13) étant spécifiquement configuré pour :
envoyer les données en liaison descendante à l'équipement d'utilisateur au moyen de l'antenne.

6. RRU selon la revendication 4 ou 5, dans laquelle le module de réception (11) est en outre configuré pour :

recevoir une valeur pondérée d'antenne dynamique en liaison descendante envoyée par la BBU ; et

le module de traitement de données (12) étant spécifiquement configuré pour :

réaliser le traitement de mise en correspondance diffusion-antenne sur les données de diffusion selon la valeur pondérée d'antenne dynamique en liaison descendante.

7. Unité en bande de base (BBU), la BBU étant appliquée à une station de base, la station de base comprenant la BBU et une unité radio distante (RRU), et la BBU comprenant :

un module de traitement de données (21), configuré pour réaliser un traitement de mise en correspondance de ressources sur des données en liaison descendante à transmettre afin d'obtenir des données de diffusion, la réalisation d'un traitement de mise en correspondance de ressources consistant à réaliser successivement un codage, une modulation, une mise en correspondance de couches et une mise en correspondance d'éléments

EP 3 310 123 B1

de ressource ; et
un module d'envoi (22), configuré pour envoyer les données de diffusion à la RRU, de sorte que la RRU réalise un traitement de mise en correspondance diffusion-antenne sur les données de diffusion, et envoie des données traitées par mise en correspondance à un équipement d'utilisateur au moyen d'une antenne ;
la BBU comprenant en outre :

un module de réception (23), configuré pour recevoir séparément des données en liaison montante et un signal de référence de sondage (SRS) envoyés par la RRU, les données de diffusion en liaison montante et le SRS étant obtenus après la séparation, par la RRU, du SRS et des données en liaison montante du signal en liaison montante, et la réalisation d'un traitement de mise en correspondance antenne-diffusion sur les données en liaison montante de l'équipement d'utilisateur afin d'obtenir des données de diffusion en liaison montante ; et
le module de traitement de données (21) étant en outre configuré pour :
traiter les données de diffusion en liaison montante.

8. BBU selon la revendication 7, dans laquelle le module de traitement de données (21) est en outre configuré pour :

déterminer une valeur pondérée d'antenne dynamique en liaison descendante ; et
le module d'envoi étant en outre configuré pour :
envoyer la valeur pondérée d'antenne dynamique en liaison descendante à la RRU, de sorte que la RRU réalise le traitement de mise en correspondance diffusion-antenne sur les données de diffusion selon la valeur pondérée d'antenne dynamique en liaison descendante.

9. BBU selon la revendication 7 ou 8, dans laquelle le module de traitement de données (21) est spécifiquement configuré pour :

obtenir des données en domaine fréquentiel après la réalisation d'un traitement par transformée de Fourier (FFT) et d'un traitement de suppression de préfixe cyclique (CP) sur les données de diffusion en liaison montante ; et
traiter les données en domaine fréquentiel afin d'obtenir les données en liaison montante.

FIG. 1

RRU signal receiving/transmitting +
Power amplification

CPRI

L1

Inverse fast
Fourier
transformation
+ Inserting a
cyclic prefix

Fast Fourier
transformation +
Removing a
cyclic prefix

Resource
mapping

Resource
demapping

Precoding

Multiple-input
multiple-output
equalization

Layer mapping

Inverse fast
Fourier
transformation

Modulation

Demodulation

Encoding

Decoding

L2

L3

FIG. 2

100

An RRU receives stream data sent by a BBU, where the stream data is obtained after the BBU performs resource mapping processing on to-be-transmitted downlink data ⟩ S110

The RRU performs stream to antenna mapping processing on the stream data ⟩ S120

The RRU sends mapping-processed data to user equipment by using an antenn ⟩ S130

FIG. 3

Signal receiving/transmitting and power amplification

Fast Fourier transformation IFFT and inserting a cyclic prefix CP

IFFT and inserting a CP

...

IFFT and inserting a CP

RRU

Stream to antenna mapping

BBU

Resource mapping

Antenna weighted value

Precoding

Layer mapping

...

Modulation

Encoding

Physical downlink control channel PDCCH 1

Physical downlink shared channel PDSCH 1

PDSCH 2

...

PDSCH 16

FIG. 4

BBU

FIG. 5A

RRU

SRS ← Sounding reference signal SRS

CONT. FROM FIG. 5A → Resource demapping ← Fourier transformation FFT and removing a cyclic prefix CP

CONT. FROM FIG. 5A → Resource demapping ← FFT and removing a CP

CONT. FROM FIG. 5A → Resource demapping ← FFT and removing a CP

CONT. FROM FIG. 5A ⟶ FFT and removing a CP

CONT. FROM FIG. 5A ⟶ FFT and removing a CP

Antenna to beam mapping

...

Signal receiving/ transmitting + Power amplification

L1 beamforming coefficient

FIG. 5B

FIG. 6A

FIG. 6B

RRU

Fixed beam weighted value

Beam weighted value switching

PRACH beam weighted value

CONT. FROM FIG. 6B

CONT. FROM FIG. 6B

CONT. FROM FIG. 6B

CONT. FROM FIG. 6B

CONT. FROM FIG. 6B

CONT. FROM FIG. 6B

CONT. FROM FIG. 6B

CONT. FROM FIG. 6B

Antenna to beam mapping

M streams of antenna data

Signal separation

Fourier transformation FFT and removing a CP

Signal separation

FFT and removing a CP

...

Signal separation

FFT and removing a CP

Signal receiving/transmitting + Power amplification

FIG. 6C

RRU 10

Receiving module 11

Data processing module 12

Sending module 13

FIG. 7

BBU 20

Data processing module 21

Sending module 22

FIG. 8

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130294419 A1
- WO 2015172277 A1
- WO 2013123670 A1
- WO 2015172290 A1
- US 20110287791 A1
- WO 20130048526 A1